# EUROPEAN PATENT APPLICATION

(11) **EP 4 261 846 A1**
(43) Date of publication of application: **18.10.2023**
(21) Application number: 22167977.2
(22) Date of filing: 12.04.2022
(51) Int. Cl.: H01B 3/44, C08L 23/08, H01B 7/14, H02K 7/18

(54) **SUBMARINE CABLE**

(71) Applicant: Borealis AG, 1020 Vienna (AT)
(72) Inventor: NILSSON, Ulf, 444 86 Stenungsund (SE); SMEDBERG, Annika, SE-4444 86 Stenungsund (SE); NILSSON, Daniel, SE - 444 86 Stenungsund (SE); FOSSUM, Kjell, 2070 Zwijndrecht (BE); GALANTE, Francisco, 28035 Madrid (ES); JAKOBSSON, Martin, 444 86 Stenungsund (SE); VIELMI, Davide, 1020 Vienna (AT)
(74) Representative: Borealis AG

(57) **Abstract**

A submarine cable core comprising a conductor which is surrounded by at least an inner semiconductive layer, an insulation layer and an outer semiconductive layer in that order; wherein said insulation layer comprises: a low density polyethylene homopolymer or low density polyethylene copolymer with at least one polyunsaturated comonomer and optionally one or more further comonomers; and, a copolymer comprising at least one polar comonomer selected from the group consisting of an alkyl acrylate, an alkyl methacrylate or vinyl acetate, wherein the amount of polar monomer units in the insulation layer is from 1 to 150 micromol per gram based on the total amount of polymer components in the insulation layer.

## Description

The invention relates to a wet design cable for a saltwater environment, herein after called a submarine cable, in particular a wet design submarine power cable operated at high voltages, i.e. a submarine power cable, comprising at least one cable core comprising an insulation layer in which water tree retardation is effected using a blend of a polyolefin and a polar copolymer, in particular a blend of LDPE and a polar copolymer. The invention further relates to a process for the preparation of such a submarine cable and the use of such a submarine cable in a saltwater environment, e.g. in a submarine environment.

### Background

Sustainable development, defined as "development that meets the needs of the present without compromising the ability of future generations to meet their own needs", is a central topic globally. Also the cable industry, as technology supplier to the power industry, is supporting many of the changes that industry is undergoing to deliver a more sustainable power system.

Power cables can play a big role in sustainable development, for example by enabling integration of remote, offshore renewable energy sources through submarine power cable technology. Submarine cables are employed in several scenarios, such as in offshore renewable energy schemes to shore, e.g. wind farms or wave and tidal systems, power supply to islands, connection of autonomous grids, supply of marine platforms, short-haul crossings (e.g. transport of power across rivers, channels, straits, fjords, bays or lakes). Generally, these submarine cable systems transport power at high voltage (HV).

In view of sustainable development, there is also a key need to design materials to be used for power cables, including submarine power cables, with sustainability performance in mind and to focus on possibilities to facilitate the handling of the cables when they have reached end-of-life (EOL) to contribute to a circular economy.

A standard power cable comprises at least one cable core. Each cable core comprises a conductor surrounded by an inner semiconductive layer (also called the conductor shield), insulation layer and outer semiconductive layer (also called the insulation shield) in that order. The cable may also be provided with additional components and layers, such as for instance a jacketing layer, as is well known in the art.

Where a cable will be used underwater, it is known to sheath the cable with a moisture impervious layer, typically a metallic moisture impervious layer to protect the cable from problems caused by the ingress of water. We call this a dry cable design. The moisture impervious layer prevents water ingress into the cable but increases the raw material cost of the cable significantly and is also expensive to apply. Also, conventional moisture impervious layers are often made of lead which has significant environmental implications.

In comparison to the dry design we have the so-called wet design or wet cable construction, which is defined as a cable construction where the moisture impervious layer is absent. Such a design is therefore free of a moisture impervious layer, in particular free of an extruded metallic moisture impervious layer. The terms "dry" and "wet" design are well known in the art and are discussed in Cigre TB722.

A wet design cable construction allows migration of water or moisture into the interior parts of the cable core. This enables the use of a 'simpler' cable design wherein at least one layer and the corresponding manufacturing step is eliminated, thus reducing material consumption and increasing sustainability performance of the cable design. At the same time, the elimination of moisture impervious layer, often an extruded metallic sheet, also facilitates the handling of the cables when they have reached end-of-life and hence increases the sustainability performance.

However, letting water migrate inside a power cable is not trivial and it is known that insulated cables often suffer from shortened service life when installed in an environment where the polymer insulation is exposed to water, e.g. underground, at locations of high humidity or underwater.

The combination of electrical field and water can lead to water tree degradation of the insulation material, which is affected by the presence of inhomogeneities, microcavities and impurities in the insulation material. The water tree structure constitutes local damage in the insulation, leading to reduced electrical breakdown strength. The growth of water trees may finally result in electrical breakdown or electrical failure if they initiate an electrical tree.

In the wet design cables therefore, care must be taken to maximise water tree retardant (WTR) properties in the insulation layer of the cable and these cables must be rigorously tested, including wet ageing tests, in order to demonstrate that the cable exhibits sufficient water tolerance.

One proven WTR technology is the so-called "polymer WTR", wherein a polar copolymer is added to the LDPE type of matrix. WTR solutions are well known in the art and described in various literature disclosures.

In EP1731566, the combination of an unsaturated polyolefin with a particular vinyl content with a polar copolymer is taught to improve wet ageing properties.

WO2010/112333 describes a cable comprising a conductor surrounded by a semiconductive layer and an insulation layer wherein the semiconductive layer consists of a composition (A) comprising a polar copolymer (a) and carbon black, and the insulation layer consists of a composition (B) comprising a polar copolymer wherein the difference of the melting temperature of said polar copolymer (a) and the melting temperature Tm(b2) of said polar copolymer (b2) is less than 25°C.

WO 85/05216 describes an insulation composition consisting of polyethylene and 10 to 40 wt% (meth)acrylate polymer such as EBA.

JP H08 319381 exemplifies some blends based on EMA and LDPE and test sheets made thereof which are subject to water-tree testing in very strong saline solution (2 mol/L).

Since submarine power cables are exposed to very demanding conditions, for example the sea water being potentially corrosive, and are operated at higher voltages, typically 36kV, 66 kV and above 66 kV (RMS value of the voltage between any two conductors or phases in a three-phase cable), the present inventors are in particular concerned with the wet ageing performance of submarine power cables in a saltwater environment (as described in Cigre TB722) operated at these higher voltages.

Salt water or seawater also tends to exacerbate the problem of water treeing in cables so the design of submarine cables, exposed to salt water, is challenging. As well as sodium chloride, salt water can comprise magnesium, calcium, potassium and sulphate ions amongst others. These dissolved salts can have an impact on the water tree formation in a wet design cable. Salt water, such as seawater, is a more aggressive environment than, for example, fresh water. Hence, it does not follow that a material that can operate in a freshwater environment can withstand exposure to sea water.

Furthermore, as explained above, submarine power cables are typically operated at higher voltages. This adds requirements on the dielectric loss level in the selected insulation materials. Dielectric losses are linearly proportional to the tan δ and preferably are kept as low as possible for both technical and economic reasons but also in view of sustainability. Low losses means that only a low amount of transmitted electric energy is lost as thermal energy inside the cable core insulation. These losses will mean economic losses for the power line operator. Low losses also reduce the risk for thermal runaway, i.e. an unstable situation where the temperature of the insulation will increase due to the tan δ. When the temperature is increased, normally the tan δ will also increase. This will further increase the dielectric losses, and thus the temperature. The results will be a dielectric failure of the cable.

As explained above, wet design cables often use a WTR solution such as the polymer WTR to exhibit sufficient water tolerance. However, an important drawback of the polymer WTR solution is that the dielectric losses as measured by tan δ may be increased compared to the dielectric losses in a dry design polymer solution normally used for high voltage (HV) applications.

Therefore there is a need to identify a submarine cable core material system (i.e. a combination of materials for the insulation and semiconductive layers of a submarine cable core(s)) that is able to be operated in a saltwater environment at high voltages and which balances salt water wet ageing performance as well as the level of dielectric losses as measured by tan δ while maintaining a good sustainability performance.

Wet design cables are discussed in Johansson et al 8th International Conference on Insulated Power Cables, Influence of submarine conditions on the long-term performance of AC XLPE cables, Jicable'11 - 19 - 23 June 2011, Versailles - France. The tested cables use a high-performance water tree retardant, copolymer XLPE.

In Jicable '19, Paris 23-27 June 2019, Featherstone et al. "Full scale wet age testing of XLPE insulated power cables in salt water" reports saline testing on wet design XLPE cables.

The present invention is based on the surprising finding that the above need may be fulfilled by an insulation layer of wet design submarine cables and cable cores, in particular wet design submarine power cables and cable cores, which comprises a combination of (i) a LDPE homopolymer or LDPE copolymer with a polyunsaturated comonomer and (ii) a copolymer comprising polar monomer units in a low amount, e.g. in an amount of polar monomer units in the total polymer part of the composition from 1 to 150 micromol (1·10⁻⁶ to 150·10⁻⁶ mol) per gram which balances the salt water wet ageing performance with the dielectric losses as measured by tan δ.

The combination of the specific polymers in the insulation and semiconductive layers defined herein, their ability to resist dielectric breakdown in a saltwater environment while maintaining an acceptable dielectric loss or tan δ is new.

### Summary of Invention

Viewed from one aspect the invention provides a submarine cable core, e.g. to carry power, in a saltwater environment, e.g. in the sea or under the sea;
said cable core comprising a conductor which is surrounded by at least an inner semiconductive layer, an insulation layer and an outer semiconductive layer in that order;
wherein said insulation layer comprises:
   (i) a low-density polyethylene homopolymer or low-density polyethylene copolymer comprising at least one polyunsaturated comonomer and optionally one or more further comonomers; and,
   (ii) a copolymer comprising at least one polar comonomer selected from the group consisting of an alkyl acrylate, an alkyl methacrylate and vinyl acetate,
wherein the amount of polar monomer units in the insulation layer is from 1 to 150 micromol per gram based on the total amount of polymers in the insulation layer.

Viewed from another aspect the invention provides a submarine cable core, e.g. to carry power, in a saltwater environment, e.g. in the sea or under the sea;
said cable core comprising a conductor which is surrounded by at least an inner semiconductive layer, an insulation layer and an outer semiconductive layer in that order;
wherein said insulation layer comprises:
   (i) a low-density polyethylene homopolymer or low-density polyethylene copolymer comprising at least one polyunsaturated comonomer and optionally one or more further comonomers; and,
   (ii) a copolymer comprising at least one polar comonomer selected from the group consisting of an alkyl acrylate, an alkyl methacrylate and vinyl acetate,
   wherein the amount of polar monomer units in the insulation layer is from 1 to 150 micromol per gram based on the total amount of polymers in the insulation layer; and
   wherein said inner and outer semiconductive layers independently comprise:
   (a) a low-density polyethylene copolymer of ethylene and at least one polar comonomer selected from the group consisting of an alkyl acrylate, an alkyl methacrylate or vinyl acetate; and
   (b) carbon black.

Viewed from yet another aspect the invention provides the use of a submarine cable core comprising a conductor which is surrounded by at least an inner semiconductive layer, an insulation layer and an outer semiconductive layer in that order;
wherein said insulation layer comprises:
(i) a low-density polyethylene homopolymer or low-density polyethylene copolymer comprising at least one polyunsaturated comonomer and optionally one or more further comonomers; and,
(ii) a copolymer comprising at least one polar comonomer selected from the group consisting of an alkyl acrylate, an alkyl methacrylate and vinyl acetate,
wherein the amount of polar monomer units in the insulation layer is from 1 to 150 micromol per gram based on the total amount of polymers in the insulation layer; and
wherein said inner and outer semiconductive layers independently comprise:
(a) a low-density polyethylene copolymer of ethylene and at least one polar comonomer selected from the group consisting of an alkyl acrylate, an alkyl methacrylate or vinyl acetate; and
(b) carbon black.

Viewed from one aspect the invention provides a submarine cable comprising at least one submarine cable core, preferably at least three submarine cable cores as defined above.

The submarine cable of the invention is preferably a wet design submarine cable.

The submarine cable core of the invention is crosslinkable or crosslinked. In a further embodiment therefore the insulation layer further comprises a crosslinking agent, preferably a peroxide, and is crosslinkable. In a further embodiment the inner and/or outer semiconductive layer further comprise a crosslinking agent, preferably a peroxide, and are crosslinkable. In a further embodiment the insulation layer, inner and outer semiconductive layers further comprise a crosslinking agent, preferably a peroxide, and are crosslinkable. When subjected to crosslinking conditions, the crosslinkable submarine cable core can be crosslinked. The peroxide decomposes and generates free radicals that initiate a crosslinking reaction in the composition. Hence, after the crosslinking reaction the peroxide is essentially completely consumed.

Viewed from another aspect the invention provides a crosslinked submarine cable core obtainable by the crosslinking of the crosslinkable submarine cable core as hereinbefore defined. Viewed from another aspect the invention provides the use of a crosslinked submarine cable core as hereinbefore defined, e.g. in a submarine cable to carry power, in a saltwater environment, e.g. in the sea or under the sea.

Viewed from another aspect the invention provides a process for producing a submarine cable core comprising a conductor surrounded by at least an inner semiconductive layer, an insulation layer, and an outer semiconductive layer in that order, wherein the process comprises the steps of
- extruding, such as coextruding, on a conductor an inner semiconductive layer, an insulation layer and outer semiconductive layer; and
   crosslinking one or more of said inner semiconductive layer, insulation layer and outer semiconductive layer;
   wherein said insulation layer comprises
      (i) a low-density polyethylene homopolymer or low-density polyethylene copolymer comprising at least one polyunsaturated comonomer and optionally one or more further comonomers; and,
      (ii) a copolymer comprising at least one polar comonomer selected from the group consisting of an alkyl acrylate, an alkyl methacrylate and vinyl acetate,
   wherein the amount of polar monomer units in the insulation layer is from 1 to 150 micromol per gram based on the total amount of polymers in the insulation layer; and
   wherein said inner and outer semiconductive layers independently comprise:
      (a) a low-density polyethylene copolymer of ethylene and at least one polar comonomer selected from the group consisting of an alkyl acrylate, an alkyl methacrylate or vinyl acetate; and
      (b) carbon black.

### Detailed description of the invention

The present invention provides a submarine cable core and a submarine cable comprising said cable core for use in a saltwater environment, such as a crosslinkable submarine cable or crosslinked submarine cable, e.g. a crosslinkable or crosslinked submarine power cable, comprising at least one cable core comprising a conductor which is surrounded by at least an inner semiconductive layer, an insulation layer and an outer semiconductive layer. The invention also relates to a crosslinked submarine cable comprising a conductor which is surrounded by at least an inner semiconductive layer, an insulation layer and an outer semiconductive layer.

In the present description and claims, the term "salt water" or "saltwater environment" as used herein refers to water comprising dissolved sodium chloride (NaCI) having a NaCl content of 1.0 wt. % or more, preferably 2.0 wt. % or more, more preferably 3.0 wt. % or more and up to 10 wt.%. or less, preferably 8 wt.% or less, more preferably 6 wt.% or less, relative to the total amount of water.

The term "cable" as used herein, is intended to denote a cable comprising at least one cable core, optionally two cable cores and preferably three cable cores. Each "cable core" as used herein, comprises a conductor surrounded by at least an inner semiconductive layer, an insulation layer and an outer semiconductive layer.

The one or more cable cores in the cable may be surrounded by at least one reinforcing layer and/or an armouring layer adapted for mechanical protection of the cable. The armouring layer may comprise metallic wires, braid, sheath or low loss armour. These variations and cable constructions are familiar to the person skilled in the art. The armouring layer may extend across parts of the cable.

The term "AC cable" refers to an alternating current (AC) cable comprising at least three cable cores, one for each of the three phases.

The term "submarine" is intended to denote at least partially, under or in any body of salt water, such as a saltwater lake, sea, ocean etc, as defined above. For example, a submarine cable is a cable running at least partially, under or in any body of salt water.

Throughout the present description, the term "high voltage" or HV refers to a voltage above 36 kV(RMS value of the voltage between any two conductors or phases in a three-phase cable).

The submarine cable comprising at least one cable core of the invention is preferably of wet design as hereinbefore defined. Ideally, the submarine cable does not comprise a moisture impervious layer preventing ingress of water. The submarine cables comprising at least one cable core of the invention, despite their wet design, offer excellent resistance to water treeing in a saltwater environment while maintaining acceptable dielectric loss performance. This can be demonstrated via an analysis of electrical breakdown strength after wet ageing of the cable core in salt water and tan δ measurements, respectively. Alternatively viewed therefore, the invention offers submarine cable cores and hence submarine cables with improved electrical breakdown strength in a saltwater environment while maintaining low dielectric losses.

Some experts regard the presence of a polymeric jacket over the outer semiconductive layer as a "semi wet" design as the jacket layer will limit rate of water vapour ingress. We regard such as a solution as a wet design herein as the jacketing layer is not water or moisture impervious.

### Insulation layer

The submarine cable core of the invention comprises an insulation layer comprising:
(i) a low-density polyethylene homopolymer or low-density polyethylene copolymer comprising at least one polyunsaturated comonomer and optionally one or more further comonomers; and,
(ii) a copolymer comprising at least one polar comonomer selected from the group consisting of an alkyl acrylate, an alkyl methacrylate and vinyl acetate,
wherein the amount of polar monomer units in the insulation layer is from 1 to 150 micromol per gram based on the total amount of polymer components in the insulation layer.

### Low-density polyethylene homopolymer or low-density polyethylene copolymer with at least one polyunsaturated comonomer and optionally one or more further comonomers - insulation layer

Component (i) of the insulation layer is an LDPE homopolymer or LDPE copolymer with at least one polyunsaturated comonomer and optionally one or more further comonomers. This will be called LDPE polymer component (i) herein.

Although the term LDPE is an abbreviation for low density polyethylene, the term is understood not to limit the density range but covers the LDPE-like high pressure polymerized (HP) polyethylenes. The term LDPE describes and distinguishes only the nature of HP polyethylene with typical features, such as different branching architecture, compared to the polyethylene produced in the presence of an olefin polymerisation catalyst.

It will be appreciated that the term "LDPE homopolymers" generally refers to low density polyethylene polymers consisting essentially of ethylene monomers. Ideally therefore the LDPE homopolymer is free of comonomer. However, small amounts of comonomers, different from ethylene, that do not materially affect the properties of LDPE may be tolerated as such a material is in essence still a homopolymer. In this regard, a small amount of comonomer may be understood as less than 3 wt%, such as less than 1 wt%, less than 0.5 wt% or less than 0.1 wt% of comonomers different from ethylene, based on the total weight of the LDPE homopolymer.

It is preferred if LDPE polymer component (i) is an LDPE copolymer with at least one polyunsaturated comonomer.

In one embodiment, the LDPE polymer component (i) is an LDPE copolymer with at least one polyunsaturated comonomer and optionally one or more further comonomers.

Preferably, the LDPE copolymer component (i) is a binary copolymer of ethylene and one polyunsaturated comonomer only.

The polyunsaturated comonomer preferably consists of a straight carbon chain with at least 8 carbon atoms and at least 4 carbons between the non-conjugated double bonds, of which at least one is terminal. The polyunsaturated comonomer is preferably a diene, e.g., a diene which comprises at least eight carbon atoms, the first carbon-carbon double bond being terminal and the second carbon-carbon double bond being non-conjugated to the first one, e.g., a diene which is selected from C₈- to C₁₄-non-conjugated diene or mixtures thereof, for example, selected from 1,7-octadiene, 1,9-decadiene, 1,11-dodecadiene, 1,13-tetradecadiene, or mixtures thereof, e.g., from 1,7-octadiene, 1,9-decadiene, 1,11-dodecadiene, 1,13-tetradecadiene.

If another comonomer is present, this may be a C₃ to C₁₀ alpha-olefin.

The LDPE copolymer component (i) preferably comprises 0.001 to 40 wt%, preferably 0.05 to 40 wt%, more preferably 0.05 to 30 wt%, still more preferably 0.10 to 30 wt%, still more preferably 0.10 to 20 wt% of one or more comonomer(s) in total (i.e. all comonomers), based on the total weight of the LDPE copolymer. In one embodiment, the LDPE copolymer comprises 0.05 to 20 wt%, preferably 0.05 to 15 wt%, such as 1.0 to 10 wt%, especially 0.05 to 5.0 wt%, such as 1.0 to 5.0 wt%, more especially 0.05 to 3.0 wt% such as 0.10 to 3.0 wt% comonomer in total.

The polyunsaturated comonomer content is preferably 0.001 to 10 wt%, preferably 0.01 to 10 wt%, more preferably 0.01 to 5.0 wt%, still more preferably 0.01 to 3.0 wt%., especially 0.01 to 2.0 wt%, more especially 0.1 to 2.0 wt%. In some embodiments, the only comonomer present is a polyunsaturated comonomer.

The LDPE polymer component (i) is preferably unsaturated. It preferably has a total amount of carbon-carbon double bonds of more than 0.4/1000 carbon atoms, preferably more than 0.5/1000 carbon atoms, such as more than 0.6/1000 carbon atoms, especially more than 0.7/1000 carbon atoms, e.g. more than 0.8/1000 carbon atoms. The upper limit of the amount of carbon-carbon double bonds present in the polyolefin is not limited and may preferably be less than 5.0/1000 carbon atoms, preferably less than 3.0/1000 carbon atoms.

In some embodiments, the total amount of carbon-carbon double bonds, which originate from vinyl groups, vinylidene groups and *trans*-vinylene groups, if present, in the LDPE polymer component (i), is higher than 0.40/1000 carbon atoms, preferably higher than 0.50/1000 carbon atoms, more preferably higher than 0.60/1000 carbon atoms, even more preferably higher than 0.70/1000 carbon atoms, yet even more preferably 0.75/1000 carbon atoms, especially 0.8/1000 carbon atoms. Preferably, the total amount of carbon-carbon double bonds, which originate from vinyl groups, vinylidene groups and *trans*-vinylene groups is of lower than 5.0/1000 carbon atoms, preferably lower than 3.0/1000 carbon atoms.

In some embodiments, the LDPE polymer component (i) contains at least vinyl groups and the total amount of vinyl groups is preferably higher than 0.05/1000 carbon atoms, still more preferably higher than 0.08/1000 carbon atoms, and most preferably of higher than 0.11/1000 carbon atoms. In some embodiments, the LDPE polymer component (i) contains at least vinyl groups and the total amount of vinyl groups is preferably higher than 0.10/1000 carbon atoms, such as higher than 0.15/1000 carbon atoms, such as higher than 0.20/1000 carbon atoms, more preferably higher than 0.25/1000 carbon atoms, especially higher than 0.30/1000 carbon atoms, more especially higher than 0.35/1000 carbon atoms, most especially higher than 0.40/1000 carbon atoms, such as higher than 0.45/1000 carbon atoms or 0.50/1000 carbon atoms.

Preferably, the total amount of vinyl groups is of lower than 4.0/1000 carbon atoms. More preferably, the LDPE polymer component (i), prior to crosslinking, contains vinyl groups in total amount of more than 0.20/1000 carbon atoms, still more preferably of more than 0.30/1000 carbon atoms, and most preferably of more than 0.40 vinyl/1000 carbon atoms, e.g. higher than 0.45 vinyl/1000C.

It is understood that, in the present specification, all amounts or values in relation to unsaturation in general, e.g. vinyl groups, refer to amounts or values determined prior to crosslinking.

Preferably, the LDPE polymer component (i) has a melt flow rate MFR2.16/190°C of 0.1 to 50 g/10 min, preferably 0.3 to 20 g/10 min, more preferably 0.3 to 15 g/10 min, even more preferably 0.50 to 15 g/10 min, or 0.60 to 10 g/10 min, such as 0.60 to 3.0 g/10min. In some embodiments the MFR₂ is 0.50 to 8.0 g/10 min, such as 0.60 to 6.0 g/10 min, preferably 0.70 to 5.5 g/10 min, such as 0.80 to 5.0 g/10 min, more preferably 0.90 to 4.75 g/10 min, even more preferably 1.0 to 4.5 g/10 min, yet even more preferably 1.1 to 4.25 g/10 min, most preferably 1.2 to 4.0 g/10 min, such as 1.2 to 3.0 g/10min.

Any LDPE polymer component (i) may have a density of 905 to 935 kg/m³, preferably 910 to 935 kg/m³, such as 910 to 928 kg/m³.

The insulation layer is preferably free of carbon black.

The insulation layer may comprise at least 90 wt% of the LDPE polymer component (i), such as at least 91 wt%, at least 92 wt%, at least 93 wt%, at least 94 wt%, especially at least 95 wt% or at least 96 wt% and up to 99.5 wt%, especially up to 99 wt%, based on the total weight of the insulation layer. It is possible to use a blend of LDPE polymers as component (i). Where a blend of LDPE polymers is used then this percentage refers to the sum of the LDPE polymers present.

The LDPE polymer component (i) generally forms the balance of the layer once other components are calculated.

### Polar copolymer - copolymer comprising at least one polar comonomer selected from the group consisting of an alkyl acrylate, an alkyl methacrylate and vinyl acetate - insulation layer

The insulation layer also comprises a copolymer comprising at least one polar comonomer selected from the group consisting of an alkyl acrylate, an alkyl methacrylate or vinyl acetate (also termed component (ii) or polar copolymer). It is possible to use a mixture of such components (ii).

The copolymer comprising at least one polar comonomer, preferably is a low-density polyethylene copolymer of ethylene and at least one polar comonomer selected from the group consisting of an alkyl acrylate, an alkyl methacrylate and vinyl acetate as the polymer water tree retarder. This copolymer can be the same or different as the low-density polyethylene copolymer of ethylene and at least one polar comonomer selected from the group consisting of an alkyl acrylate, an alkyl methacrylate and vinyl acetate used in the inner and outer semiconductive layers. In general, the definition of the low-density polyethylene copolymer of ethylene and at least one polar comonomer selected from the group consisting of an alkyl acrylate, an alkyl methacrylate and vinyl acetate offered below applies to the component (ii) of the insulation layer as well as to component (a) of the inner and outer semiconductive layer.

The polar comonomer(s) of the low-density polyethylene copolymer of ethylene and at least one polar comonomer selected from the group consisting of an alkyl acrylate, an alkyl methacrylate and vinyl acetate is preferably selected from C₁- to C₆-alkyl acrylates, C₁- to C₆-alkyl methacrylates or vinyl acetate. Still more preferably, the LDPE copolymer used is a copolymer of ethylene with C₁- to C₆-alkyl acrylate, such as methyl, ethyl, propyl or butyl acrylate, or vinyl acetate.

The use of ethylene methyl acrylate (EMA) copolymer, ethylene methyl methacrylate (EMMA) copolymer, ethylene ethyl acrylate (EEA) copolymer, ethylene ethyl methacrylate (EEMA) copolymer, ethylene butyl methacrylate (EBMA) copolymer, ethylene butyl acrylate (EBA) copolymer or ethylene vinyl acetate (EVA) copolymer is preferred.

The use of ethylene methyl acrylate (EMA), ethylene butyl acrylate (EBA) or ethylene ethyl acrylate (EEA) is especially preferred.

The copolymer comprising at least one polar comonomer of the insulation layer preferably comprises 0.001 to 40 wt%, more preferably 0.05 to 40 wt%, still more preferably 1 to 30 wt%, of one or more comonomer(s), based on the total weight of the copolymer. The polar comonomer content is more preferably 5 to 30 wt%, 5 to 25 wt%, 5 to 20 wt% such as 7 to 25 wt%, especially 7 to 20 wt%, 10 to 25 wt% or 10 to 30 wt%.

Preferably, the copolymer comprising at least one polar comonomer of the insulation layer has a melt flow rate MFR2.16/190°C of 0.1 to 50 g/10 min, more preferably 1.0 to 30 g/10 min, even more preferably 2.0 to 25 g/10 min, and most preferably 2.0 to 22 g/10 min. In some embodiments, the copolymer comprising at least one polar comonomer of the insulation layer has a melt flow rate MFR2.16/190°C of 0.1 to 20 g/10 min, more preferably 0.5 to 12 g/10min. In still further preferred options, copolymer comprising at least one polar comonomer of the insulation layer has an MFR2.16/190°C of 2.0 to 20.0 g/10min, such as 2.0 to 17.0 g/10min, preferably 2.0 to 15.0 g/10 min., such as 2.0 to 13.5 g/10min, 2.0 to 13.0 g/10min., 2.5 to 12.5 g/10min., or 2.5 to 12.0 g/10min such as 5.0 to 12.0 g/10min.

The copolymer comprising at least one polar comonomer may have a density of 910 to 940 kg/m³, preferably 915 to 940 kg/m³, such as 920 to 940 kg/m³.

According to one embodiment, the insulation layer as used in the cable core of the present invention comprises at least 0.5 wt% of the copolymer comprising at least one polar comonomer, i.e. component (ii), relative to the total weight of the insulation layer, preferably at least 0.60 wt%, such as at least 0.70 wt% or 0.75wt%, more preferably at least 0.80 wt%, such as at least 0.90 wt%, at least 0.95 wt% or at least 1.0 wt%.

In an advantageous embodiment of the present invention, the insulation layer as used in the cable core of the present invention comprises 9.0 wt% or less of the copolymer comprising at least one polar comonomer, i.e. component (ii), relative to the total weight of the insulation layer, such as 8.0 wt% or less, preferably 7.0 wt% or less, such as 6.0 wt% or less, 5.0 wt% or less, 4.0 wt% or less, or 3.0 wt% or less. Where a blend of these polymers is used in component (ii) then this percentage refers to the sum of the copolymers comprising at least one polar comonomer present.

Preferably, the amount of polar monomer units in the insulation layer is 1 micromol or higher, such as 2.5 micromol or higher, more preferably 5 micromol or higher, such as 7.5 micromol or higher, and still more preferably 10 micromol or higher, such as 15 micromol or 20 micromol or higher per gram of the total amount of polymer components in the insulation layer.

Preferably, the amount of polar monomer units in the insulation layer is 150 micromol or lower, preferably 140 micromol or lower, such as 130 micromol or lower, 120 micromol or lower, more preferably 100 micromol or lower, even more preferably 80 micromol or lower, such as 75 micromol or lower, yet even more preferably 70 micromol or lower, such as 60 micromol or lower, and still more preferably 50 micromol or lower, such as 40 micromol or lower per gram of the total amount of polymer components in the insulation layer.

The amount of polar monomer units is expressed in micromoles per gram of all polymers, i.e. all polymeric components, contained in the insulation layer. Of course, in the insulation layer, the polar monomer units are, preferably, essentially completely incorporated into the backbone of component (ii), i.e. the copolymer comprising at least one polar comonomer. Following this, the LDPE homopolymer or LDPE copolymer with at least one polyunsaturated comonomer of component (i) in the insulation layer, is preferably essentially free of polar monomer units.

The inventors have found that the copolymer comprising at least one polar comonomer acts as a polymer WTR and hence provides the salt water wet ageing performance of the insulation layer. Surprisingly, also low amounts of this polar copolymer blended with component (i) in the insulation layer provide an adequate salt water wet ageing performance. Without being bound to this theory, the inventors believe that the combination on one hand of the specific "delivery mechanism" of the polar comonomers to the insulation layer (i.e. mixing a polar copolymer or component (ii) into the component (i) in contrast to copolymerizing polar comonomers). The inventors believe that component (ii) forms localised "islands" of polar copolymer in the LDPE phase of component (i) in the cable core insulation. The mentioned islands comprising higher polarity material of component (ii) are believed to counteract water tree growth, hence increasing salt water wet ageing performance while they have a limited effect on the dielectric loss performance. On the other hand, specifically selecting the total amount of polar comonomers in the insulation layer, leads to a balance between the salt water wet ageing performance and the dielectric losses as measured by tan δ which is ideally suited for submarine cables, especially submarine power cables operated at higher voltages and in particular submarine AC power cables operated at higher voltages.

### Crosslinking agent - insulation layer

The insulation layer may be crosslinkable or crosslinked. In such crosslinkable embodiments, it is preferred if the crosslinkable insulation layer comprises a peroxide. It is preferred if the crosslinkable insulation layer comprises a crosslinking agent, preferably a peroxide, once the cable core structure has been formed. Mixtures of peroxides may be used.

The preferred crosslinking agent is an organic peroxide. Non-limiting examples are organic peroxides, such as di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof. Preferably, the peroxide is selected from 2,5-di(tert-butylperoxy)-2,5-dimethylhexane, di(tert-butylperoxyisopropyl)benzene, dicumylperoxide, tert-butylcumylperoxide, or mixtures thereof. Most preferably, the peroxide is dicumylperoxide.

The peroxide is preferably present in the insulation layer in an amount of less than 3.0 wt%, preferably 0.1-2.5 wt%, more preferably 0.2-2.5 wt%, even more preferably 0.3-2.25 wt%, such as 0.3-2.0 wt%, based on the weight of the insulation layer. Where a blend of crosslinking agents is used then this percentage refers to the sum the crosslinking agents present.

### Inner and outer semiconductive layers

The inner and outer semiconductive layers can be the same or different, preferably the same. By the same here means that the chemical composition of the inner and outer semiconductive layers is identical, prior to crosslinking. The inner and outer semiconductive layers are different to the insulation layer.

The semiconductive properties of the semiconductive layers result from the conducting component contained within the semiconductive layer, i.e. a carbon black.

It is preferred if both inner and outer semiconductive layers comprise an LDPE copolymer of ethylene and at least one polar comonomer selected from the group consisting of an alkyl acrylate, an alkyl methacrylate or vinyl acetate and carbon black. It is preferred if both inner and outer semiconductive layers comprise an LDPE copolymer of ethylene and at least one polar comonomer selected from the group consisting of an alkyl acrylate, an alkyl methacrylate or vinyl acetate, carbon black, a peroxide and optionally an antioxidant. The discussion which follows can apply to either or both of the semiconductive layers.

### Low density polyethylene (LDPE) copolymer of ethylene and at least one polar comonomer selected from the group consisting of an alkyl acrylate, an alkyl methacrylate and vinyl acetate - semiconductive layers

Said LDPE copolymer of the inner and/or outer semiconductive layer comprises a polar comonomer(s) selected from the group of alkyl acrylates, alkyl methacrylates and vinyl acetate, or a mixture thereof. It is also possible to use a mixture of such LDPE copolymers.

Further preferably, said polar comonomer(s) is selected from C₁- to C₆-alkyl acrylates, C₁- to C₆-alkyl methacrylates or vinyl acetate. Still more preferably, the LDPE copolymer used in the inner and/or outer semiconductive layer is a copolymer of ethylene with C₁- to C₆-alkyl acrylate, such as methyl, ethyl, propyl or butyl acrylate, or vinyl acetate.

The use of ethylene methyl acrylate (EMA) copolymer, ethylene methyl methacrylate (EMMA) copolymer, ethylene ethyl methacrylate (EEMA) copolymer, ethylene butyl methacrylate (EBMA) copolymer, ethylene ethyl acrylate (EEA) copolymer, ethylene butyl acrylate (EBA) copolymer or ethylene vinyl acetate (EVA) copolymer is preferred.

The use of ethylene methyl acrylate (EMA), ethylene butyl acrylate (EBA) or ethylene ethyl acrylate (EEA) is especially preferred.

The LDPE copolymer of the inner and/or outer semiconductive layer preferably comprises 0.001 to 40 wt%, more preferably 0.05 to 40 wt%, still more preferably 1 to 30 wt%, of one or more comonomer(s), based on the total weight of the LDPE copolymer. The polar comonomer content is more preferably 5 to 30 wt%, 5 to 25 wt%, 5 to 20 wt% such as 7 to 20 wt% or 10 to 20 wt%.

Preferably, the LDPE copolymer of the inner and/or outer semiconductive layer has a melt flow rate MFR2.16/190°C of 0.1 to 50 g/10 min, more preferably 1.0 to 30 g/10 min, even more preferably 2.0 to 25 g/10 min, yet even more preferably 3.0 to 22.0 g/10 min and most preferably 4.0 to 21.0 g/10 min, such as 5.0 to 20.0 g/10min.

The LDPE copolymer may have a density of 910 to 940 kg/m³, preferably 915 to 940 kg/m³, such as 920 to 940 kg/m³.

The inner and/or outer semiconductive layer may comprise at least 50 wt% of the LDPE copolymer, such as at least 55 wt%, based on the total weight of the respective semiconductive layer. Where a blend of LDPE copolymers is used then this percentage refers to the sum the LDPE copolymers present.

In some embodiments, there is at least 60 wt% of the LDPE copolymer in the inner and/or outer semiconductive layer, based on the total weight of the respective semiconductive layer. The LDPE copolymer generally forms the balance of the layer once other components of the semiconductive layer are selected. The inner and/or outer semiconductive layer preferably contains no more than 90 wt% of the LDPE copolymer.

### Polymerisation process

In general, any of the LDPE homopolymer or copolymers of the present invention, described in any of the sections above or below, can be produced by any conventional polymerisation process. Preferably, it is produced by radical polymerisation, such as high-pressure radical polymerisation. High pressure polymerisation can be effected in a tubular reactor or an autoclave reactor. Preferably, it is a tubular reactor. In general, the pressure can be within the range of 1200-3500 bars and the temperature can be within the range of 100°C-350°C. Further details about high pressure radical polymerisation are given in Encyclopedia of Polymer Science and Engineering, Vol. 6 (1986), pp 383-410 and Encyclopedia of Materials: Science and Technology, Elsevier Science Ltd.: "Polyethylene: High-pressure, R.Klimesch, D.Littmann and F.-O. Mähling pp. 7181-7184.2001, which is herewith incorporated by reference.

It is well known that e.g. propylene can be used as a comonomer or as a chain transfer agent (CTA), or both, whereby it can contribute to the total amount of the C-C double bonds, preferably to the total amount of the vinyl groups. For the purpose of the present invention, when a compound which can also act as comonomer, is specifically used during the polymerisation as CTA for providing double bonds, then said copolymerisable comonomer is not calculated to the comonomer content. For the purpose of the present invention, propylene may be used as CTA and may contribute to the total amount of the vinyl groups but it is not calculated to the comonomer content.

### Carbon Black - semiconductive layers

According to the present invention, the inner and outer semiconductive layers further comprise carbon black.

The semiconductive properties result from the carbon black added. Thus, the amount of carbon black is at least such that a semiconducting layer is obtained. Preferably, the inner and/or outer semiconductive layer comprises 10 to 60 wt%, preferably 15-48 wt% carbon black, based on the total weight of the respective semiconductive layer. In other preferred embodiments, the amount of carbon black is 10-45 wt%, such as 20-45 wt%, preferably 25-45 wt%, more preferably 25-40 wt%, or especially 30 to 41 wt%, based on the weight of the respective semiconductive layer.

Any carbon black can be used which is electrically conductive. Examples of suitable carbon blacks include furnace blacks and acetylene blacks. Mixtures may also be used. Where a blend of carbon blacks is used then this percentage refers to the sum of the carbon blacks present.

The carbon black may have a nitrogen surface area (BET) of 5 to 400 m²/g, for example of 10 to 300 m²/g, e.g. of 30 to 200 m²/g, when determined according to ASTM D3037-93. Further, the carbon black may have one or more of the following properties:
i) a primary particle size of at least 5 nm which is defined as the number average particle diameter according to ASTM D3849-95a,
ii) iodine adsorption number (IAN) of at least 10mg/g, for example 10 to 300 mg/g, e.g. 30 to 200 mg/g, when determined according to ASTM D-1510; and/or
iii) DBP (dibutyl phthalate) absorption number (= oil number) of at least 30 cm³/100g, for example 60 to 300 cm³/100g, e.g. 70 to 250 cm³/100g, for example 80 to 200 cm³/100g, e.g. 90 to 180 cm³/100g, when measured according to ASTM D 2414.

Furthermore, the carbon black may have one or more of the following properties:
a) a primary particle size of at least 5 nm which is defined as the number average particle diameter according ASTM D3849-95a;
b) iodine number of at least 30 mg/g according to ASTM D1510;
c) oil absorption number of at least 30 ml/100g which is measured according to ASTM D2414.

One group of suitable furnace blacks have a mean primary particle size of 28 nm or less. The mean primary particle size is defined as the number average particle diameter measured according to ASTM D3849-95a. Particularly suitable furnace blacks of this category may have an iodine number between 60 and 300 mg/g according to ASTM D1510. It is further suitable that the oil absorption number (of this category) is between 50 and 225 ml/100g, for example between 50 and 200 ml/100g and this is measured according to ASTM D2414.

Another group of equally suitable furnace blacks have a mean primary particle size of greater than 28 nm. The mean primary particle size is defined as the number average particle diameter according to ASTM D3849-95a. Suitable furnace blacks of this category have an iodine number between 30 and 200 mg/g according to ASTM D1510. Further the oil absorption number (of this category) is, for example, between 80 and 300 ml/100 g measured according to ASTM D2414.

Other suitable carbon blacks can be made by any other process or can be further treated.

Suitable carbon blacks for semiconductive cable core layers are suitably characterized by their cleanliness. Therefore, suitable carbon blacks have an ash-content of less than 0.2 wt% measured according to ASTM D1506, a 325 mesh sieve residue of less than 30 ppm according to ASTM D1514 and have less than 1 wt% total sulphur according to ASTM D1619.

Furnace carbon black is generally acknowledged term for the well-known carbon black type that is produced in a furnace-type reactor. As examples of carbon blacks, the preparation process thereof and the reactors, reference can be made to i.e. EP-A-0629222 of Cabot, US 4,391,789, US 3,922,335 and US 3,401,020. As an example of commercial furnace carbon black grades described in ASTM D 1765-98b i.e. N115, N220 and N550, can be mentioned. Furnace carbon blacks are conventionally distinguished from acetylene carbon blacks which are another carbon black type suitable for the semiconductive layer. Acetylene carbon blacks are produced in an acetylene black process by reaction of acetylene and unsaturated hydrocarbons, e.g. as described in US 4,340,577.

Particularly, acetylene blacks may have a mean primary particle size of larger than 20 nm, for example 20 to 80 nm. The mean primary particle size is defined as the number average particle diameter according to the ASTM D3849-95a. Suitable acetylene blacks of this category have an iodine number between 30 to 300 mg/g, for example 30 to 150 mg/g according to ASTM D1510. Further the oil absorption number (of this category) is, for example between 80 to 300 ml/100 g, e.g. 100 to 280 ml/100 g and this is measured according to ASTM D2414. Acetylene black is a generally acknowledged term and are very well known and e.g. supplied by Denka.

A further embodiment according to the present invention discloses a semiconductive layer, wherein the conducting component comprises or consists of a conductive carbon black, e.g. a carbon black with one or more, for example, all, of the following properties:
a primary particle size of at least 5 nm which is defined as the number average particle diameter according to ASTM D3849-95a;
an iodine adsorption number (IAN) of at least 10 mg/g, e.g., 10 to 300 mg/g, when determined according to ASTM D-1510; or
a DBP (dibutyl phthalate) absorption number (= oil absorption number) of at least 30 cm³/100g, e.g. 60 to 300 cm³/100g, when measured according to ASTM D 2414.

### Crosslinking agent - semiconductive layers

The inner and/or outer semiconductive layer is crosslinkable or crosslinked. Several ways of crosslinking can be envisaged, however, to this extent a crosslinking agent, preferably a peroxide, is preferably present in the crosslinkable inner and/or outer semiconductive layer in an amount of less than 3.0 wt%, more preferably 0.1-2.5 wt%, even more preferably 0.3-2.5 wt% based on the total weight of the respective semiconductive layer. In some embodiments the peroxide is present in 0.4 to 2.5 wt%, preferably 0.4 to 2.0 wt%, such as 0.4 to 1.4 wt%, based on the total weight of the respective semiconductive layer. Where a blend of crosslinking agents is used then this percentage refers to the sum the crosslinking agents present.

The preferred crosslinking agent is an organic peroxide. Non-limiting examples are organic peroxides, such as di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof. Preferably, the peroxide is selected from 2,5-di(tert-butylperoxy)-2,5-dimethylhexane, di(tert-butylperoxyisopropyl)benzene, dicumylperoxide, tert-butylcumylperoxide, or mixtures thereof. Most preferably, the peroxide is bis(tert butylperoxyisopropyl)benzene.

### Antioxidant

Any layer of the submarine cable core can comprise an antioxidant. As antioxidant, sterically hindered or semi-hindered phenols, aromatic amines, aliphatic sterically hindered amines, organic phosphates, thio compounds, polymerized 2,2,4-trimethyl-1,2-dihydroquinoline and mixtures thereof, can be mentioned.

More preferred, the antioxidant is selected from the group of 4,4'-bis(1,1'dimethylbenzyl)diphenylamine, para-oriented styrenated diphenylamines, 4,4'-thiobis (2-tert-butyl-5-methylphenol), polymerized 2,2,4-trimethyl-1,2-dihydroquinoline, or derivatives thereof.

More preferred, the antioxidant is selected from the group (but not limited to) of 4,4'- bis(1,1'dimethylbenzyl)diphenylamine, para-oriented styrenated diphenylamines, 4,4'-thiobis (2-tert. butyl-5-methylphenol), 2,2'-thiobis(6-t-butyl-4-methylphenol), distearylthiodipropionate, 2,2'-thio-diethyl-bis-(3-(3,5-di-tertbutyl-4-hydroxyphenyl)propionate, polymerized 2,2,4-trimethyl-1,2-dihydroquinoline, or derivatives thereof. Of course, not only one of the above-described antioxidants may be used but also any mixture thereof.

The amount of antioxidant, optionally a mixture of two or more antioxidants, can range from 0.005 to 2.5 wt-%, such as 0.01 to 2.5 wt-%, preferably 0.01 to 2.0 wt-%, more preferably 0.03 to 2.0 wt-%, especially 0.03 to 1.5 wt-%, more especially 0.05 to 1.5 wt%, such as 0.05 to 1.3 wt%, or 0.1 to 1.5 wt%, such as 0.1 to 1.25 wt%, based on the total weight of the respective semiconductive layer.

In some embodiments the amount of antioxidant, optionally a mixture of two or more antioxidants, is 0.03 to 2.0 wt%, preferably 0.04 to 1.5 wt%, such as 0.05 to 1.0 wt%, more preferably 0.05 to 0.8 wt%, such as 0.05 to 0.7 wt%, especially 0.07 to 0.6 wt%, more especially 0.08 to 0.5 wt%, such as 0.09 to 0.4 wt% or 0.1 to 0.35 wt%, based on the total weight of the insulation layer.

### Other components

The inner and/or outer semiconductive layer or the insulation layer may comprise further additives. As possible additives, scorch retarders, crosslinking boosters, stabilisers, processing aids, flame retardant additives, acid scavengers, inorganic fillers, voltage stabilizers, or mixtures thereof can be mentioned.

A "scorch retarder" is defined to be a compound that reduces premature crosslinking i.e. the formation of scorch during extrusion. Besides scorch retarding properties, the scorch retarder may simultaneously result in further effects like boosting, i.e. enhancing crosslinking performance. The use of a scorch retarder in the insulation layer is especially preferred.

Useful scorch retarders can be selected from unsaturated dimers of aromatic alpha-methyl alkenyl monomers, substituted or unsubstituted diphenylethylene, quinone derivatives, hydroquinone derivatives such as 2,5-ditert-butyl hydroquinone, monofunctional vinyl containing esters and ethers, or mixtures thereof. More preferably, the scorch retarder is selected from unsaturated dimers of aromatic alpha-methyl alkenyl monomers, such as 2,4-diphenyl-4-methyl-1-pentene, substituted or unsubstituted diphenylethylene, or mixtures thereof. A highly preferred option is 2,4-diphenyl-4-methyl-1-pentene.

Preferably, the amount of scorch retarder is within the range of 0.005 to 1.0 wt%, more preferably within the range of 0.01 to 0.80 wt%, based on the weight of the layer in question. Further preferred ranges are 0.03 to 0.75 wt-%, 0.05 to 0.50 wt%, 0.05 to 0.70 wt-% and 0.10 to 0.50 wt-%, based on the total weight of the layer in question.

The crosslinking booster may be a compound containing at least 2, unsaturated groups, such as an aliphatic or aromatic compound, an ester, an ether, an amine, or a ketone, which contains at least 2, unsaturated group(s), such as a cyanurate, an isocyanurate, a phosphate, an ortho formate, an aliphatic or aromatic ether, or an allyl ester of benzene tricarboxylic acid. Examples of esters, ethers, amines and ketones are compounds selected from general groups of diacrylates, triacrylates, tetraacrylates, triallylcyanurate, triallylisocyanurate, 3,9-divinyl-2,4,8,10-tetra-oxaspiro[5,5]-undecane (DVS), triallyl trimellitate (TATM) or N,N,N',N',N",N"-hexaallyl-1,3,5-triazine-2,4,6-triamine (HATATA), or any mixtures thereof. The crosslinking booster can be added in an amount of such crosslinking less than 2.0 wt%, for example, less than 1.5 wt%, e.g. less than 1.0 wt%, for example, less than 0.75 wt%, e.g. less than 0.5 wt%, and the lower limit thereof is, for example, at least 0.05 wt%, e.g., at least 0.1 wt%, based on the total weight of the layer in question.

In a further embodiment of the present invention the insulation layer contains no water tree retarders other than the component (ii) discussed herein.

### Preparation of polymer compositions

During preparation of the polymer compositions, the components can be blended, e.g. melt mixed in compounding equipment. Preferably, said process does not involve the use of peroxide. Typically, the process involves heating to a temperature of at least 150 °C, preferably at least 160 °C, such as at least 170 °C. The process will generally involve heating to 300 °C or less, such as 250 °C or less.

It is understood that all definitions and preferences, as described above, equally apply for all further embodiments, as described below. In one embodiment the insulation layer composition of the present invention may comprise a crosslinking agent before said composition is used for cable production, whereby the polymer components and the crosslinking agent can be blended by any conventional mixing process, e.g. by addition of the crosslinking agent to a melt of a composition of polymer, e.g. in an extruder, as well as by adsorption of liquid peroxide, peroxide in liquid form or peroxide dissolved in a solvent on a solid composition of polymer, e.g. pellets thereof. The obtained insulation layer composition of components, for example, among others the polymer components (i) and (ii), the antioxidant(s) and the crosslinking agent, is then used for an article, e.g. a cable core, preparation process.

In another embodiment, the crosslinking agent may be added e.g. in a step during the preparation of the crosslinkable article, and also forms the insulation layer composition as used in the cable core of the present invention. When the crosslinking agent is added during the article preparation process, then, for example, the crosslinking agent, as described herein, is added in a liquid form at ambient temperature, or is preheated above the melting point thereof or dissolved in a carrier medium, as well known in the art.

The insulation layer composition as used in the cable core of the present invention may also comprise further additive(s), or further additive(s) may be blended to the polymer composition during a preparation process of an article comprising the insulation layer composition. It is understood that the further additive(s), including any antioxidant, crosslinking agent, scorch retarder, may be added in the form of a masterbatch, as well known in the art.

In a particular embodiment, the semiconductive layers as used in the cable core of the present invention may be obtained by several means using several different production technologies such as, for example, internal mixers such as Banbury or Bolling, continuous single screws such as BUSS, or continuous twin screws such as Farrel or Werner & Pfleiderer. The type of mixer and the chosen operating conditions for the preparation of the semiconductive compound will have a direct impact on the melt quality and will affect final compound properties, such as melt flow rate, volume resistivity and surface smoothness. Of particular usefulness is the co-kneader technology (BUSS, X-compound). In the preparation of the semiconductive layers, the conductive filler may be added to the polymer in the molten state with full control of the production temperature. With this technology, a blend with sufficiently evolved dispersive and distributive mixing can be achieved by a person skilled in the art.

It is understood that the crosslinking agent is generally added to the semiconductive layer compositions in similar ways as for the insulation layer composition, as described in detail in the embodiments above.

### Conductor

The submarine cable core of the invention comprises a conductor. The conductor can be made from any suitable conductive metal, such as copper or aluminium.

### Submarine cable and cable core

A submarine power cable is defined to be a cable comprising at least one cable core, transferring energy operating at any voltage, preferably operating at voltages higher than 30 kV. It is understood that all definitions and preferences, as described above, equally apply for all further embodiments, as described below.

The voltage applied to the submarine power cable can be alternating (AC), direct (DC), or transient (impulse). Moreover, the submarine cable according to the present invention is very advantageously an AC submarine power cable, for example a submarine cable operating at voltages of 1-525 kV, 6-525 kV, 36-275 kV, such as 66-275 kV, 36-220 kV, such as 66-220 kV, 36-150 kV, such as 66-150 kV, and above 66 kV (RMS voltages, voltage between any two conductors in a three phase cable). In some embodiments, the submarine cable is a submarine AC power cable operating at voltages of equal to or higher than 36 kV, preferably equal to or higher than 66 kV. In some embodiments, the submarine cable is an AC power cable operating at voltages of lower than 550 kV, preferably lower than 525 kV, preferably lower than 400 kV, more preferably lower than 380 kV, especially lower than 275 kV, lower than 220 kV, or lower than 150 kV.

As well known the submarine cable can optionally comprise further layers, e.g. layers surrounding the outer semiconductive layers, such as a jacketing layer. The presence of a moisture impervious layer preventing ingress of water is preferably avoided, i.e. the submarine cable is a wet design cable.

A submarine cable core for use in a submarine cable can be produced by the process comprising the steps of (a)
- providing and mixing, for example, melt mixing in an extruder, a crosslinkable first semiconductive layer composition for the inner semiconductive layer,
- providing and mixing, for example, melt mixing in an extruder, a crosslinkable insulation layer composition for the insulation layer,
- providing and mixing, for example, melt mixing in an extruder, a second semiconductive layer composition for the outer semiconductive layer,

(b) applying on a conductor, for example, by co-extrusion,
   - a melt mix of the first semiconductive layer composition obtained from step (a) to form the inner semiconductive layer,
   - a melt mix of insulation layer composition obtained from step (a) to form the insulation layer, and
   - a melt mix of the second semiconductive layer composition obtained from step (a) to form the outer semiconductive layer, and
(c) optionally crosslinking at crosslinking conditions one or more of the insulation layer, the inner semiconductive layer and the outer semiconductive layer, of the obtained submarine cable core.

It is understood that the respective layer compositions of the present invention may comprise a crosslinking agent before said compositions are used for cable production or the crosslinking agent may be added e.g. in a step during the preparation of the crosslinkable article.

It is preferred that if a peroxide is used in the manufacture of a layer of the submarine cable core then such a layer is crosslinked. The submarine cable core is therefore crosslinkable.

The first semiconductive composition for the inner semiconductive layer, crosslinkable insulation composition for the insulation layer, and the second semiconductive composition for the outer semiconductive layer comprise the components necessary to form the respective inner semiconductive, insulation and outer semiconductive layers of the submarine cable core.

It is preferred if all layers are crosslinked. The invention further provides therefore a crosslinked submarine cable core obtained by crosslinking submarine cable cores defined herein.

The crosslinking procedure can be carried out at increased temperature such as above 150°C, e.g. 160 to 350°C.

Melt mixing means mixing above the melting point of at least the major polymer component(s) of the obtained mixture and is typically carried out in a temperature of at least 10-15°C above the melting or softening point of polymer component(s).

The term coextrusion means herein that all or part of the layer(s) are formed simultaneously using one or more extrusion heads. For instance a triple extrusion can be used for forming three layers.

In even further embodiments of the present invention, the crosslinked submarine cable core of the invention, has a tan δ measured on a 10 kV cable at 90°C and 5 kV/mm, as described below in the determination methods section, of at most 4.5·10⁻⁴, preferably at most 4·10⁻⁴, such as 3.5·10⁻⁴, even more preferably at most 3·10⁻⁴ such as 2.5·10⁻⁴ and/or a tan δ measured on a 10 kV cable at 90°C and 10 kV/mm of at most 12·10⁻⁴, preferably at most 10·10⁻⁴, such as 8·10⁻⁴ , even more preferably at most 7.5·10⁻⁴ such as 6.5·10⁻⁴.

In even further embodiments of the present invention, the crosslinked submarine cable of the invention, has an AC electrical breakdown strength value (or Weibull Eb) measured on a 20 kV cable (5.5 mm nominal insulation thickness) after 1 year wet ageing in salt water, as described below in the determination methods section, of at least 40 kV/mm, such as at least 41 kV/mm, 42 kV/mm, 43 kV/mm or 44 kV/mm, preferably at least 45 kV/mm.

Moreover said first and second semiconductive compositions may, for example, be identical.

The thickness of the insulation layer of the submarine power cable, for example, of the submarine AC cable, is typically 2 mm or more, for example, at least 2.5 mm, at least 3 mm, e.g., of at least 3.5 to 50 mm, for example, from 4 to 50 mm, preferably of at least 4.5 to 35 mm, for example from 5 to 30 mm when measured from a cross section of the insulation layer of the submarine cable.

The thickness of the inner and/or outer semiconductive layer of the submarine power cable may typically be in the range of 0.4 mm or more, such as 0.5 mm or more, for example, 0.7 mm to 5.0 mm when measured from a cross section of the layer.

Viewed from another aspect the invention provides a submarine cable, preferably a submarine power cable, more preferably a submarine AC power cable, comprising at least one cable core comprising a conductor which is surrounded by at least an inner semiconductive layer, an insulation layer and an outer semiconductive layer in that order;
wherein said inner and/or outer semiconductive layer, based on the total weight of the respective semiconductive layer, independently comprise:
at least 50 wt% of a LDPE copolymer with a polar comonomer selected from the group consisting of an alkyl acrylate, an alkyl methacrylate or vinyl acetate,
   25-48 wt% carbon black; and
   0.1-2.5 wt.% of a peroxide; and
wherein said insulation layer, based on the total weight of the insulation layer, comprises
   (i) a low density polyethylene homopolymer or low density polyethylene copolymer with at least one polyunsaturated comonomer and optionally one or more further comonomers; and,
   (ii) a copolymer comprising at least one polar comonomer selected from the group consisting of an alkyl acrylate, an alkyl methacrylate or vinyl acetate,
   (iii) 0.1-2.5 wt.% of a peroxide;
wherein the amount of polar monomer units in the insulation layer is from 1 to 150 micromol per gram based on the total amount of polymer components in the insulation layer.

### Use

The submarine cable of the invention is one that is especially adapted for use in a saltwater environment, in particular at high voltages. The cable may therefore be buried under the sea or may be located in the sea or on the seabed. Submarine cables that are buried in land but close to shore may also experience saltwater environments underground. Submarine cables that are used in tidal estuaries are also subject to salt water. There are also saltwater lakes and saltwater seas where cables of the invention would have utility, e.g. in such bodies of water or under such bodies of water. The cables of the invention are suitable for use in any saltwater environment. It is further understood that all definitions and preferences, as described above, equally apply for all further embodiments, as described below.

Viewed from another aspect therefore, the invention provides a submarine cable comprising at least one, preferably at least two, more preferably at least three submarine cable cores as herein before defined.

In a preferred embodiment according to the present invention, the submarine cable is a submarine AC cable comprising at least three submarine cable cores as herein before defined.

In a more preferred embodiment according to the present invention, the submarine cable is a submarine high voltage (HV) AC cable comprising at least three submarine cable cores as herein before defined and operating at a voltage of at least 30 kV.

In one embodiment, the invention concerns a process comprising burying a submarine cable as herein before defined under the sea.

In one embodiment, the invention concerns a process comprising laying a submarine cable as herein defined on the seabed. Such a submarine cable may therefore be dispensed from a spool. Such a process might involve a submarine cable laying vessel.

In one embodiment, the submarine cables of the invention might be used to connect an offshore electricity generating system to the shore, the submarine cable therefore lying on the seabed.

Viewed from another aspect therefore, the invention provides an electricity generating system comprising:
(A) an offshore electricity generator such as a wind turbine;
(B) a submarine cable as claimed herein connecting said offshore electricity generator to a substation, located offshore and/or onshore, via the seabed.

Offshore wind turbines are generally positioned on offshore platforms and linked by submarine cables to an offshore substation situated on a separate platform and/or an onshore substation. These submarine cables and hence the submarine cable cores of the invention which perform exceptionally in the presence of sea water, are ideally suited for this use.

In general therefore, the submarine cables of the invention may connect offshore apparatus to an onshore apparatus or other offshore apparatus. The submarine cables of the invention may therefore connect these apparatuses via the sea or seabed.

In one embodiment, the submarine cables of the invention might be used to distribute power generated in an offshore electricity generating system and to connect said offshore electricity generating system to a substation or collection system, located offshore and/or onshore, via the sea or seabed.

In one embodiment, the invention concerns a submarine cable operation method, comprising:
providing a submarine cable comprising:
   - three submarine cable cores, as herein before defined,
   - an armour surrounding the three submarine cable cores;
transmitting AC electrical power by said three submarine cable cores.

In accordance with one embodiment, transmitting AC electrical power comprises supplying AC electrical power generated by a wind farm system to a corresponding shore substation. According to an alternative embodiment, transmitting AC electrical power comprises supplying said AC electrical power from a shore substation to a wind farm generation system.

The submarine cable of the present invention is particularly suitable in power generation plants, for example offshore wind farms, tidal or wave systems.

The invention will now be described with reference to the following non-limiting examples.

### Determination methods

Unless otherwise stated in the description or experimental part the following methods were used for the property determinations.
wt%: % by weight

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg (MFR₂) or 21.6 kg (MFR₂₁).

### Density

The density was measured according to ISO 1183-1 / method A. Sample preparation is done by compression moulding in accordance with ISO 17855-2 :2016.

### Comonomer contents

a) Quantification of alpha-olefin content in low density polyethylenes by NMR spectroscopy:
   The comonomer content was determined by quantitative 13C nuclear magnetic resonance (NMR) spectroscopy after basic assignment (J. Randall JMS - Rev. Macromol. Chem. Phys., C29(2&3), 201-317 (1989)). Experimental parameters were adjusted to ensure measurement of quantitative spectra for this specific task.

Specifically solution-state NMR spectroscopy was employed using a Bruker AvanceIII 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 °C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 °C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.

Quantities were calculated using simple corrected ratios of the signal integrals of representative sites based upon methods well known in the art.

b) Determination of Comonomer content of polar comonomers in low density polyethylene Comonomer content (wt%) was determined in a known manner based on Fourier transform infrared spectroscopy (FTIR) determination calibrated with quantitative nuclear magnetic resonance (NMR) spectroscopy.

Films were pressed using a Specac film press at 150°C, approximately at 5 tons, 1-2 minutes, and then cooled with cold water in a not controlled manner. The accurate thickness of the obtained film samples was measured.

After the analysis with FTIR, base lines in absorbance mode were drawn for the peaks to be analysed. The absorbance peak for the comonomer was normalised with the absorbance peak of polyethylene. An FTIR peak height ratio was correlated to the polar comonomer content by reference materials determined by NMR. The NMR spectroscopy calibration procedure was undertaken in the conventional manner which is well documented in the literature.

### Quantification of polar comonomer content in in polymers by NMR spectroscopy

The polar comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g. "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

Below is exemplified the determination of the polar comonomer content of ethylene ethyl acrylate, ethylene butyl acrylate and ethylene methyl acrylate.

The weight-% can be converted to mol-% by calculation. It is well documented in the literature.

### (1) Ethylene copolymers containing butyl acrylate

Film samples of the polymers were prepared for the FTIR measurement: 0.5-0.7 mm thickness was used for ethylene butyl acrylate >6 wt% butylacrylate content and 0.05 to 0.12 mm thickness was used for ethylene butyl acrylate <6 wt % butylacrylate content.

After the FT-IR analysis the maximum absorbance for the peak for the butyl acrylate >6 wt% at 3450 cm⁻¹ was subtracted with the absorbance value for the base line at 3510 cm⁻¹ (A_{butylacrylate} - A₃₅₁₀). Then the maximum absorbance peak for the polyethylene peak at 2020 cm⁻¹ was subtracted with the absorbance value for the base line at 2120 cm⁻¹ (A₂₀₂₀-A₂₁₂₀). The ratio between (A_{butylacrylate}-A₃₅₁₀) and (A₂₀₂₀-A₂₁₂₀) was then calculated in the conventional manner which is well documented in the literature.

The maximum absorbance for the peak for the comonomer butylacrylate <6 wt% at 1165 cm⁻¹ was subtracted with the absorbance value for the base line at 1865 cm⁻¹ (A_{butyl acrylate}- A₁₈₆₅). Then the maximum absorbance peak for polyethylene peak at 2660 cm⁻¹ was subtracted with the absorbance value for the base line at 1865 cm⁻¹ (A₂₆₆₀ - A₁₈₆₅). The ratio between (A_{butyl acrylate}-A₁₈₆₅) and (A₂₆₆₀-A₁₈₆₅) was then calculated.

### (2) Ethylene copolymers containing ethyl acrylate

Film samples of the polymers were prepared for the FTIR measurement: 0.5 mm thickness was used for ethylene ethyl acrylate.

After the FT-IR analysis the maximum absorbance for the peak for the ethyl acrylate at 3450 cm⁻¹ with linear baseline correction applied between approximately 3205 and 3295 cm⁻¹ (A_{ethylacrylate}) was determined. Then the maximum absorbance peak for the polyethylene peak at 2020 cm⁻¹ with linear baseline correction applied between approximately 1975 and 2120 cm⁻¹ was determined (A₂₀₂₀)_{.} The ratio between (A_{ethylacrylate}) and (A₂₀₂₀) was then calculated in the conventional manner which is well documented in the literature.

### (3) Ethylene copolymers containing methyl acrylate

Film samples of the polymers were prepared for the FTIR measurement: 0.1 mm thickness was used for ethylene methyl acrylate >8 wt% methyl acrylate content and 0.05 mm thickness was used for ethylene methyl acrylate <8 wt% methyl acrylate content.

After the analysis the maximum absorbance for the peak for the methyl acrylate >8 wt% at 3455 cm⁻¹ was subtracted with the absorbance value for the base line at 3510 cm⁻¹

(A_{methylacrylate}- A₃₅₁₀). Then the maximum absorbance peak for the polyethylene peak at 2675 cm⁻¹ was subtracted with the absorbance value for the base line at 2450 cm⁻¹ (A₂₆₇₅ -A₂₄₅₀). The ratio between (A_{methylacrylate}-A₃₅₁₀) and (A₂₆₇₅-A₂₄₅₀) was then calculated in the conventional manner which is well documented in the literature.

The maximum absorbance for the peak for the comonomer methyl acrylate <8 wt% at 1164 cm⁻¹ was subtracted with the absorbance value for the base line at 1850 cm⁻¹ (A_{methyl acrylate} - A₁₈₅₀). Then the maximum absorbance peak for polyethylene peak at 2665 cm⁻¹ was subtracted with the absorbance value for the base line at 1850 cm⁻¹ (A₂₆₆₅ - A₁₈₅₀). The ratio between (A_{methyl acrylate}-A₁₈₅₀) and (A₂₆₆₅-A₁₈₅₀) was then calculated.

### Methods ASTM D3124-98, and ASTM D6248-98, to determine amount of double bonds in the polymer, i.e. the polyethylene

The methods ASTM D3124-98 and ASTM D6248-98 apply for determination of double bonds in the LDPE component (i). The LDPE component (i) in this method description, referred to as "the polymer".

The methods ASTM D3124-98, and ASTM D6248-98, include on one hand a procedure for the determination of the amount of double bonds/1000 C-atoms which is based upon the ASTM D3124-98 method. In the ASTM D3124-98 method, a detailed description for the determination of vinylidene groups/1000 C-atoms is given based on 2,3-dimethyl-1,3-butadiene. In the ASTM D6248-98 method, detailed descriptions for the determination of vinyl and *trans*-vinylene groups/1000 C-atoms are given based on 1-octene and *trans-3-*hexene, respectively. The described sample preparation procedures therein have here been applied for the determination of vinyl groups/1000 C-atoms, vinylidene groups/1000 C-atoms and *trans*-vinylene groups/1000 C-atoms in the present invention. The ASTM D6248-98 method suggests possible inclusion of the bromination procedure of the ASTM D3124-98 method but the samples with regard to the present invention were not brominated. For the determination of the extinction coefficient for these three types of double bonds, the following three compounds have been used: 1-decene for vinyl, 2-methyl-1-heptene for vinylidene and *trans*-4-decene for *trans*-vinylene and the procedures as described in ASTM D3124-98 and ASTM-D6248-98 were followed with the above-mentioned exception.

The total amount of vinyl bonds, vinylidene bonds and *trans*-vinylene double bonds of "the polymer" was analysed by means of IR spectrometry and given as the amount of vinyl bonds, vinylidene bonds and *trans*-vinylene bonds per 1000 carbon atoms.

The polymer to be analysed were pressed to thin films with a thickness of 0.5-1.0 mm. The actual thickness was measured. FT-IR analysis was performed on a Perkin Elmer Spectrum One. Two scans were recorded with a resolution of 4 cm⁻¹.

### 1) Polymer compositions comprising polyethylene homopolymers and copolymers or polyethylene homopolymers and copolymers, except polyethylene copolymers with > 0.4 wt% polar comonomer

For polyethylenes three types of C=C containing functional groups were quantified, each with a characteristic absorption and each calibrated to a different model compound resulting in individual extinction coefficients:
- vinyl (R-CH=CH2) via 910 cm⁻¹ based on 1-decene [dec-1-ene] giving E = 13.13 l·mol⁻¹·mm⁻¹
- vinylidene (RR'C=CH2) via 888 cm⁻¹ based on 2-methyl-1-heptene [2-methyhept-1-ene]giving E = 18.24 l·mol⁻¹·mm⁻¹
- trans-vinylene (R-CH=CH-R') via 965 cm⁻¹ based on trans-4-decene [(E)-dec-4-ene] giving E = 15.14 l·mol⁻¹·mm⁻¹

For polyethylene homopolymers or copolymers with < 0.4 wt% of polar comonomer linear baseline correction was applied between approximately 980 and 840 cm⁻¹.

### 2) Polymer compositions comprising polyethylene copolymers or polyethylene copolymers with > 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:
- vinyl (R-CH=CH2) via 910 cm⁻¹ based on 1-decene [dec-1-ene] giving E = 13.13 l·mol⁻¹·mm⁻¹
- vinylidene (RR'C=CH2) via 888 cm⁻¹ based on 2-methyl-1-heptene [2-methyhept-1-ene] giving E = 18.24 l·mol⁻¹·mm⁻¹
   EBA:
      For ethylene butyl acrylate (EBA) systems linear baseline correction was applied between approximately 920 and 870 cm⁻¹.
   EEA:
      For ethylene ethyl acrylate (EEA) systems linear baseline correction was applied between approximately 920 and 825 cm⁻¹.
   EMA:
      For ethylene emthyl acrylate (EMA) systems linear baseline correction was applied between approximately 930 and 870 cm⁻¹.

The methods ASTM D3124-98, and ASTM D6248-98, include on the other hand also a procedure to determine the molar extinction coefficient. At least three 0.18 mol•l⁻¹ solutions in carbon disulphide (CS₂) were used and the mean value of the molar extinction coefficient used.

The amount of vinyl groups originating from the polyunsaturated comonomer per 1000 carbon atoms was determined and calculated as follows:
The polymer to be analysed and a reference polymer have been produced on the same reactor, basically using the same conditions, i.e. similar peak temperatures, pressure and production rate, but with the only difference that the polyunsaturated comonomer is added to the polymer to be analysed and not added to reference polymer. The total amount of vinyl groups of each polymer was determined by FT-IR measurements, as described herein. Then, it is assumed that the base level of vinyl groups, i.e. the ones formed by the process and from chain transfer agents resulting in vinyl groups (if present), is the same for the reference polymer and the polymer to be analysed with the only exception that in the polymer to be analysed also a polyunsaturated comonomer is added to the reactor. This base level is then subtracted from the measured amount of vinyl groups in the polymer to be analysed, thereby resulting in the amount of vinyl groups/1000 C-atoms, which result from the polyunsaturated comonomer.

### Tan δ measurements on 10 kV cables

### Cable core production

The 10 kV cable cores having the following dimensions (described below) were extruded and vulcanized on a pilot CCV line, equipped with a triple head, using a line speed of 5.76 m/min and the following temperatures on the heating zones: 490/415/395/375 °C in the vulcanizing tube and then the cable core is cooled with water. The semiconductive layers that have been used in the two 10 kV cable cores (around 3.5 mm insulation thickness) comprise the same semiconductive material both for the inventive example as the comparative example.

The inner and outer semiconductive layers comprise LE0595 supplied by Borealis (which contains carbon black and peroxide). The cable cores have the following dimensions:
50 mm² Al conductor
Inner semiconductive layer: 1.0 ±0.1 mm thick
Insulation layer: 3.5-3.6 mm thick
Outer semiconductive layer: 1.0 ±0.1 mm thick

### Conditioning:

The cable cores are thermally treated 72 h at 70°C in a ventilated oven before the tan δ measurements. After conditioning, the cable cores were stored at room temperature.

### Cable core sample preparation and tan δ measurement:

The active part of the cable cores are >10 m and usually between 10-15 m. The cable core ends are terminated in water terminations with circulating deionized water. A guard ring is attached on both ends on the insulation ~1 cm from the insulation screen in the water termination. The guard rings are connected to ground and the last part of the insulation screen in the water termination is additionally covered by insulating tape to eliminate measurements errors from the terminations.

The tan δ measurements were performed with the cable core coiled in an oven. At testing above room temperature the active part of the cable core (~50 cm on each end) between the oven and water termination is surrounded by a metallic pipe with circulating air from the oven. In this way the entire active part of the cable core, all the way to the water terminations is exposed to the same temperature.

The active part is covered with aluminium foil.

To reach stable temperature the cable core is heated in the oven for at least 1.5 h in order to reach isothermal condition. The cable core is thus heated by the oven and not by conductor heating.

The tan δ measurements are performed with measuring bridge Tettex 2840. The measurements at each voltage level are taken when the bridge indicates a stable value and is taken usually within 1 min. In the examples, the voltage levels applied have been adjusted to reach the following conductor stresses: 5 kV/mm, 10 kV/mm and 15 kV/mm to determine the tan δ at a temperature of the cable core of 90 °C.

### Wet ageing test in salt water

### Cable core production:

The 20 kV cable cores having the following dimensions (described below) were extruded and vulcanized on a pilot CCV line, equipped with a triple head, using a line speed of 2.79 m/min and the following temperatures on the heating zones: 460/400/385/375 °C in the vulcanizing tube and then the cable core is cooled with water. The semiconductive layers that have been used in the two 20 kV cables (around 5.5 mm insulation thickness) comprise the same semiconductive material both for the inventive example as the comparative example.

The inner and outer semiconductive layers comprise LE0595 supplied by Borealis (which contains carbon black and peroxide). The cables have the following dimensions:
150 mm² Al conductor
Inner semiconductive layer: 1.0 ±0.1 mm thick
Insulation layer: 5.5-5.6 mm thick
Outer semiconductive layer: 1.0 ±0.1 mm thick

The wet ageing properties of the cable cores in salt water are evaluated using of the Regime A procedure described in Cigre technical brochure 722 "Recommendations for additional testing for submarine cables from 6 kV (Um=7.2 kV) up to 60 kV (Um=72.5 kV)" issued in April 2018.

Preconditioning:
The cable core is immersed in a water tank for 500 hours at a temperature of 55°C. The NaCl content of the water is 3.5 wt%.

Ageing:
The cable cores are electrically aged in a water tank. The temperature of the water is 40°C and the applied 50 Hz voltage is 50 kV equal to 12 kV/mm conductor stress. The NaCl content of the water is 3.5 wt%.

### AC breakdown test:

The AC breakdown tests after 1 year of ageing is performed in agreement with Cigre technical brochure 722 section 3.6.4.1 and HD 605 5.4.15.3.4 (b). The cable core is cut into six test samples of 10 meter active length (terminations in addition). The samples are tested to breakdown with a 50 Hz AC step test within 72 hours after removal from the ageing tank, according to the following procedure:
- Start at 36 kV for 5 minutes
- Voltage increasing in step of 12 kV every 5 minutes until breakdown occurs The calculation of the AC breakdown strength value and Weibull parameters of the data set of six breakdown values follows the least squares regression procedure as described in IEC 62539 (2007).

### Experimental part

The following materials were used in these examples:
EEA 1 is a LDPE copolymer of ethylene and 15 wt% of ethyl acrylate comonomer (i.e. polar comonomer) produced in a high pressure process. The MFR₂ is around 7 g/10min.
LDPE1 is a LDPE copolymer of ethylene and 1,7-octadiene comonomer (i.e. polyunsaturated comonomer) with a vinyl content around 0.50-0.55 vinyl/1000 C and MFR₂ around 2 g/10 min produced in a high pressure process.
DCP: dicumyl peroxide

### Preparation of insulation layer compositions

The insulation layer compositions, as used in the cable core of the present invention and the cable core preparation described above, have been prepared and compared, see Table 1 below. The antioxidant, as described herein, was added in amounts as described herein to the polymer components of the inventive and comparative insulation layer compositions by compounding, melt mixing, to form intermediate compositions, which were then pelletised. The crosslinking agent was added to these intermediate compositions by distributing the crosslinking agent (crosslinking agent is in a liquid form) onto the pellets of the intermediate compositions. The wet pellets were kept until the pellets became dry. The amount of crosslinking agent used to crosslink the different compositions are presented in the description of the inventive and comparative insulation layer compositions in Table 1 below. The scorch retarder with CAS number 6362-80-7 has been added to the compositions in a similar manner as the crosslinking agent.

**Table 1 - insulation composition of the inventive and comparative examples (wt%)**

| **Composition** | **Inventive example 1** | **Comparative example 1** |
|---|---|---|
| EEA 1 | 1.96 | 22.81 |
| LDPE 1 | 96.22 | 74.89 |
| Antioxidant CAS (96-69-5) | 0.12 | 0.20 |
| **To the composition above the components below are added** | | |
| Scorch retarder CAS 6362-80-7 | 0.35 | 0.40 |
| DCP | 1.35 | 1.70 |
| **Polar comonomer in the insulation layer (µmol/g)** | 29.25 | 342.15 |

The dielectric losses have been determined by tan δ measurements at different conductor stresses for the inventive example as well as the comparative example 1. The Table 2 below summarizes measured tan δ values.

It can be clearly seen that the dielectric losses for the inventive example 1 are considerably lower than for the comparative example 1, which represents the conventional polymer WTR solution.

**Table 2 -tan δ results measured on 10 kV cable samples with LE0595 as inner and outer semiconductive layer**

| **Sample** | **Tan δ at 90 °C 5 kV/mm** | **Tan δ at 90 °C 10 kV/mm** | **Tan δ 90 °C 15 kV/mm** |
|---|---|---|---|
| Inventive example 1 | 1.3·10⁻⁴ | 5.5·10⁻⁴ | 11.8·10⁻⁴ |
| Comparative example 1 | 4.8·10⁻⁴ | 13.4·10⁻⁴ | 23.3·10⁻⁴ |

The AC electrical breakdown strength is determined for the 20 kV cables comprising inventive example 1 and comparative example 1 after 1 year of wet ageing in salt water as described above. In the 1-year test results after AC breakdown testing, the inventors believe that there is a clear benefit to using an insulation composition according to the present invention when tested in wet ageing tests in a saltwater environment.

## Claims

1. A submarine cable core comprising a conductor which is surrounded by at least an inner semiconductive layer, an insulation layer and an outer semiconductive layer in that order;
wherein said insulation layer comprises:
(i) a low-density polyethylene homopolymer or low-density polyethylene copolymer comprising at least one polyunsaturated comonomer and optionally one or more further comonomers; and,
(ii) a copolymer comprising at least one polar comonomer selected from the group consisting of an alkyl acrylate, an alkyl methacrylate and vinyl acetate,
wherein the amount of polar monomer units in the insulation layer is from 1 to 150 micromol per gram based on the total amount of polymers in the insulation layer.

2. The submarine cable core as claimed in claim 1, wherein at least one of said inner and outer semiconductive layers independently comprise:
(a) a low-density polyethylene copolymer of ethylene and at least one polar comonomer selected from the group consisting of an alkyl acrylate, an alkyl methacrylate and vinyl acetate; and
(b) carbon black.

3. The submarine cable core as claimed in claim 1 or 2, wherein the inner semiconductive layer has the same chemical composition as the outer semiconductive layer.

4. The submarine cable core as claimed in claim 2 to 3, wherein the inner and/or outer semiconductive layer comprises an ethylene alkyl acrylate or ethylene vinyl acetate copolymer, preferably an ethylene alkyl acrylate.

5. The submarine cable core as claimed in claim 1 to 4 wherein component (ii) of the insulation layer is an ethylene alkyl acrylate copolymer.

6. The submarine cable core as claimed in claim 5 wherein the ethylene alkyl acrylate copolymer is ethylene methyl acrylate, ethylene ethyl acrylate or ethylene butyl acrylate, preferably ethylene ethyl acrylate.

7. The submarine cable core as claimed in claim 1 to 6, wherein the polyunsaturated comonomer of the low-density polyethylene copolymer of component (i) is a straight carbon chain with at least 8 carbon atoms and at least 4 carbons between the non-conjugated double bonds, of which at least one is terminal.

8. The submarine cable core as claimed in claim 1 to 7, wherein the polyunsaturated comonomer of the low-density polyethylene copolymer of component (i) is C₈- to C₁₄-non-conjugated diene, preferably selected from 1,7-octadiene, 1,9-decadiene, 1,11-dodecadiene, 1,13-tetradecadiene, or mixtures thereof, more preferably selected from 1,7-octadiene, 1,9-decadiene, 1,11-dodecadiene or 1,13-tetradecadiene.

9. The submarine cable core as claimed in claim 1 to 8 wherein at least one of the insulation layer, inner and outer semiconductive layers comprises a crosslinking agent, preferably a peroxide.

10. The submarine cable core as claimed in claim 1 to 9 wherein the conductor comprises aluminium.

11. A submarine cable core as claimed in claim 1 to 10 comprising a conductor which is surrounded by at least an inner semiconductive layer, an insulation layer and an outer semiconductive layer in that order;
wherein said inner and/or outer semiconductive layer, based on the total weight of the respective semiconductive layer, independently comprise:
(a) at least 49.5 wt% of a low-density polyethylene copolymer comprising a polar comonomer selected from the group consisting of an alkyl acrylate, an alkyl methacrylate and vinyl acetate,
(b) 25-48 wt% carbon black; and
(c) 0.1-2.5 wt.% of a peroxide; and
wherein said insulation layer, based on the total weight of the insulation layer, comprises:
(i) at least 88.0 wt% of a low-density polyethylene homopolymer or low-density polyethylene copolymer with at least one polyunsaturated comonomer and optionally one or more further comonomers; and
(ii) 0.5-9.50 wt% of a copolymer comprising at least one polar comonomer selected from the group consisting of an alkyl acrylate, an alkyl methacrylate and vinyl acetate;
(iii) 0.1-2.5 wt.% of a peroxide;
wherein the amount of polar monomer units in the insulation layer is from 1 to 150 micromol per gram based on the total amount of polymers in the insulation layer.

12. A crosslinked submarine cable core obtainable by crosslinking of the cable core of claim 1 to 11.

13. The crosslinked submarine cable core as claimed in claim 12 wherein (i) the dielectric losses as measured by tan δ value at 90 °C and 5 kV/mm is at most 4.5·10⁻⁴, preferably at most 4·10⁻⁴, such as 3.5·10⁻⁴, even more preferably at most 3·10⁻⁴ such as 2.5·10⁻⁴ and/or a tan δ value at 90°C and 10 kV/mm of at most 12·10⁻⁴, preferably at most 10·10⁻⁴, such as 8·10⁻⁴ , even more preferably at most 7.5·10⁻⁴ such as 6.5·10⁻⁴, when measured on a 10 kV cable as described under "Determination methods", and/or wherein (ii) the AC breakdown strength value is at least 40 kV/mm, preferably at least 45 kV/mm after 1 year when measured on a 20 kV cable as described under "Determination methods".

14. Use of a submarine cable core as claimed in any one of the claims 1 to 11 or a crosslinked submarine cable core as claimed in any one of claims 12 to 13, in a submarine cable in a saltwater environment such as in or under a sea, for example to carry power.

15. A submarine cable comprising at least one, preferably at least two, more preferably at least three submarine cable cores as claimed in claim 1 to 14.

16. The submarine cable as claimed in claim 15, being a submarine AC cable system, preferably a submarine high voltage (HV) AC cable system.

17. An electricity generating system comprising:
(A) an offshore electricity generator such as a wind turbine;
(B) a submarine cable as claimed in claim 15 or 16 connecting said offshore generator to a substation, located offshore and/or onshore, via a sea or seabed.

18. Use of a low density polyethylene copolymer of ethylene and at least one polar comonomer selected from the group consisting of an alkyl acrylate, an alkyl methacrylate or vinyl acetate in the insulation layer of a submarine cable, wherein the amount of polar monomer units in the insulation layer is from 1 to 150 micromol per gram based on the total amount of polymer components in the insulation layer, to minimise water tree degradation and dielectric losses as measured by tan δ in the submarine cable core used in a submarine cable in a salt water environment, for example in a sea or under a sea;
said submarine cable core comprising a conductor which is surrounded by at least an inner semiconductive layer, an insulation layer and an outer semiconductive layer in that order;
wherein said insulation layer comprises
insulation layer comprises:
(i) a low-density polyethylene homopolymer or low-density polyethylene copolymer comprising at least one polyunsaturated comonomer and optionally one or more further comonomers; and,
(ii) a copolymer comprising at least one polar comonomer selected from the group consisting of an alkyl acrylate, an alkyl methacrylate and vinyl acetate,
wherein the amount of polar monomer units in the insulation layer is from 1 to 150 micromol per gram based on the total amount of polymer components in the insulation layer.
